# EUROPÄISCHE PATENTSCHRIFT

(11) **EP 3 549 824 B1**
(45) Veröffentlichungstag und Bekanntmachung des Hinweises auf die Patenterteilung: **15.02.2023**
(21) Anmeldenummer: 19163713.1
(22) Anmeldetag: 19.03.2019
(51) Int. Cl.: B60Q 3/76, B60Q 3/64, B60Q 3/82, B60Q 3/74, F21V 8/00, F21V 23/04

(54) **BELEUCHTUNGSEINRICHTUNG ZUM BELEUCHTEN EINES INNENRAUMS EINES FAHRZEUGS**
LIGHTING DEVICE FOR ILLUMINATING THE INTERIOR OF A VEHICLE
DISPOSITIF D'ÉCLAIRAGE PERMETTANT D'ÉCLAIRER UN HABITACLE D'UN VÉHICULE

(30) Priorität: 04.04.2018 DE 102018205059
(43) Veröffentlichungstag der Anmeldung: 09.10.2019
(73) Patentinhaber: VOLKSWAGEN AKTIENGESELLSCHAFT, 38440 Wolfsburg (DE)
(72) Erfinder: Zander, Klaus, 39393 Hötensleben (DE)

(56) Entgegenhaltungen:
- EP-A1- 3 407 369
- DE-A1-102014 217 200
- FR-A1- 3 010 484
- JP-A- 2012 045 992
- US-A1- 2010 238 677

## Beschreibung

Die Erfindung betrifft eine Beleuchtungseinrichtung zum Beleuchten eines Innenraums eines Fahrzeugs, mit einer Primärlichtquelle, einem Lichtrichtelement und einer die Beleuchtungseinrichtung zum Innenraum des Fahrzeugs hin abschließenden Lichtscheibe, wobei zwischen der Primärlichtquelle und der Lichtscheibe ein Lichtleitelement angeordnet ist, welches Störstellen aufweist, die in einer vorgegebenen Form angeordnet sind, wobei eine Sekundärlichtquelle derart angeordnet ist, dass von der Sekundärlichtquelle ausgesandtes Licht in das Lichtleitelement eingekoppelt wird, und wobei die Lichtscheibe berührungsempfindlich und/oder annäherungsempfindlich ausgestaltet ist.

Weiterhin betrifft die Erfindung ein Fahrzeug mit einer solchen Beleuchtungseinrichtung.

Entsprechende Beleuchtungseinrichtungen sind seit langer Zeit bekannt und in nahezu jedem Kraftfahrzeug vorhanden. Es handelt sich dabei im Regelfall um Beleuchtungseinrichtungen in Form von Leselampen oder um Leuchten zum Beleuchten des Fahrzeuginnenraums beim Ein- und Aussteigen. Diese Leuchten werden dabei normalerweise mittels mechanischer, von der Leuchte abgegrenzter Schalter bedient, die in der Nähe der Leuchten angeordnet sind. Dabei sind in diese Schalter oftmals kleine zusätzliche Leuchten integriert, die als sogenannte Schaltersuchbeleuchtung dienen und oftmals kleine Piktogramme darstellen, um die Funktion des Schalters zu verdeutlichen.

In letzter Zeit werden zunehmend mechanische Schalter ersetzt, indem die Funktion des jeweiligen Schalters in berührungsempfindlich ausgestaltete Oberflächen integriert wird. Da in den letzten Jahren berührungsempfindliche Displays in Form von Smartphones, Tablets und auch in Kraftfahrzeugen weite Verbreitung gefunden haben, ist der Benutzer inzwischen an eine solche Art der Steuerung gewöhnt. Die berührungsempfindlichen Oberflächen lassen ein ansprechendes Design zu, das nicht durch eine Vielzahl von unruhig wirkenden einzelnen mechanischen Schaltern gestört wird, sondern große ebene Flächen ermöglicht.

Im Zuge dieser Entwicklung gibt es bereits erste Ausführungsformen, bei denen Leuchten im Innenraum des Fahrzeugs durch berührungsempfindliche Oberflächen bedient werden können. Eine spezielle Version einer solchen Leuchte verwendet dabei die äußere Oberfläche der Leuchte, die sogenannten Lichtscheibe, als berührungsempfindliches Element. Auf diese Weise lässt sich eine sehr dezente Leuchte konstruieren, die eine harmonische und elegante Ausgestaltung des Fahrzeuginnenraums ermöglicht. Eine solche Ausgestaltung der Leuchte ist allerdings mit Nachteilen bei der Bedienbarkeit verbunden, da die vormals auf den jeweiligen Schaltern dargestellten Symbole entfallen, sodass ein Benutzer unter Umständen nicht erkennen kann, welche Funktion die von ihm eingeschaltete Leuchte hat, bzw. welche von mehreren vorhandenen Leuchten diejenige ist, die dem aktuellen Bedarf des Benutzers entspricht. Beispielsweise kann eine Leseleuchte in der Nähe einer allgemeinen Innenraumbeleuchtung angeordnet sein. Wenn der Benutzer nicht mit dem Fahrzeug und seiner Bedienung vertraut ist und/oder allein aus der Position der Leuchten nicht sofort hervorgeht, welche Leuchte welche Funktion besitzt, kann es zu Verwirrung und einem erhöhten Aufwand bei der Bedienung der Leuchten kommen.

Es ist bekannt, einen um die Leuchte herum angeordneten dünnen, gegebenenfalls farbig leuchtenden Ring zu verwenden, um eine mittels einer berührungsempfindlichen Oberfläche steuerbare Leuchte zu kennzeichnen. Auch diese Methode der Kennzeichnung weist den oben angesprochenen Nachteil auf, dass nicht ohne weiteres klar ist, welchen Zweck die jeweilige Leuchte erfüllt.

Weiterhin sind verschiedene Möglichkeiten, einen Schalter zur Kennzeichnung mit einem beleuchteten Symbol zu versehen, bekannt. So beschreibt beispielsweise die DE 10 2013 018 989 A1 einen berührungssensitiven Schalter, der eine Abdeckung mit einer berührungssensitiven Oberfläche und zumindest einem grafischen Symbol umfasst. Hinter der Abdeckung ist eine Trägerplatte angeordnet, auf welcher zumindest ein kapazitives Sensorelement zum Erfassen einer Berührung der berührungssensitiven Oberfläche angeordnet ist. Weiterhin wird die berührungssensitive Oberfläche hinterleuchtet, um das grafische Symbol sichtbar zu machen. Die Trägerplatte ist dabei opak ausgebildet und weist eine Mehrzahl von Durchgangsöffnungen auf, durch welche hindurch die berührungssensitive Oberfläche bzw. das grafische Symbol beleuchtet werden können.

Aus der DE 10 2009 001 412 A1 ist ein kapazitives Anzeige- und Bedienelement bekannt, welches annäherungs- bzw. berührungssensitiv ausgestaltet ist, wobei ein Leuchtmittel auf der Rückseite des Elements angeordnet ist und dieses nach vorne hin durchgreift, und wobei das Leuchtmittel in Abhängigkeit von einer Bedienhandlung eines Benutzers angesteuert wird.

Die DE 103 26 684 A1 offenbart eine Sensorvorrichtung zur Erzeugung eines Schaltsignals bei Annäherung und/oder Berührung, welche ein kapazitives Sensorelement umfasst, wobei die Berührungsempfindlichkeit durch eine Bedruckung oder Beschichtung mit leitfähigem Material erreicht wird. Die Bedruckung oder Beschichtung soll dabei im Wesentlichen durchsichtig sein, sodass eine Beleuchtung des Schalters von hinten her möglich wird. Ebenfalls kann die Bedruckung oder Beschichtung eine Symbolform haben, sodass eine Beschriftung des Schalters möglich wird.

Aus der JP 2012-045992 A ist eine Beleuchtungseinrichtung der eingangs genannten Art in Form einer Leuchtenanordnung bekannt, die von einer Primärlichtquelle beleuchtete Bereiche aufweist sowie Bereiche, die berührungsempfindlich ausgestaltet sind und zwischen den von der Primärlichtquelle bzw. den Primärlichtquellen beleuchteten Bereichen angeordnet sind. Die berührungsempfindlichen Bereiche sind als Lichtleitelemente ausgestaltet, in die von einer Sekundärlichtquelle Licht eingekoppelt werden kann, so dass die berührungsempfindlichen Bereiche für einen Benutzer ersichtlich sind.

Die nicht vorveröffentlichte EP 3 407 369 A1, die zum Stand der Technik gemäß Art 54(3) EPÜ gehört, beschreibt eine Vorrichtung zur Darstellung eines schwebenden Lichtsymbols, welches erzeugt wird, indem Licht in einen Lichtleiter eingekoppelt und von einer Pigmentierung reflektiert wird, so dass es den Lichtleiter in etwa senkrecht zur Ausdehnungsrichtung des Lichtleiters verlässt. Der Lichtleiter kann zwischen einer Primärlichtquelle und einer Abschlussscheibe der Beleuchtungsvorrichtung angeordnet sein.

Die Aufgabe der vorliegenden Erfindung besteht darin, eine Beleuchtungseinrichtung für den Innenraum eines Kraftfahrzeugs anzugeben, die sich bei optimierter Bautiefe optisch harmonisch in den Innenraum einfügt und einfach und sicher zu bedienen ist.

Die Aufgabe wird erfindungsgemäß dadurch gelöst, dass das Lichtleitelement zwischen der Primärlichtquelle und einem zu der Lichtscheibe hin weisenden Ende des Lichtrichtelements angeordnet ist. Mit anderen Worten schneidet das Lichtleitelement das Lichtrichtelement. Hierzu kann das Lichtrichtelement mehrteilig ausgeführt sein und sich in zumindest einen Teil, der zwischen der Primärlichtquelle und dem Lichtleitelement angeordnet ist, und einen Teil, der zwischen dem Lichtleitelement und der Lichtscheibe angeordnet ist, aufteilen. Dies ist insbesondere dann möglich, wenn das Lichtrichtelement ein Reflektor ist. Die erfindungsgemäße Beleuchtungseinrichtung weist Vorteile in der Bautiefe auf. Weiterhin ergibt sich von außen betrachtet ein optischer Effekt, als wenn ein Teil des Reflektors schweben würde.

Der Terminus "zwischen der Primärlichtquelle und der Lichtscheibe" bezieht sich dabei insbesondere auf eine Richtung parallel zu der Hauptausbreitungsrichtung des von der Primärlichtquelle ausgesandten Lichtes. Diese Richtung entspricht wiederum einer Richtung, die von der Primärlichtquelle durch die Lichtscheibe hindurch, insbesondere durch einen geometrischen Schwerpunkt der Lichtscheibe hindurch, zum Fahrzeuginnenraum hin verläuft.

Die Primärlichtquelle entspricht dabei der eigentlichen Leuchte und ist für die Beleuchtung des Innenraums zuständig. Sie kann als LED ausgeführt sein. Weiterhin umfasst die Leuchte ein Lichtrichtelement, das als Reflektor und/oder als Kollimator ausgeführt sein kann. Die Leuchte wird zum Fahrzeuginnenraum hin von einer so genannten Lichtscheibe, also einer transparenten Abschlussscheibe, begrenzt. Von dieser Abschlussscheibe aus gelangt das von der Primärlichtquelle abgestrahlte Licht in den Fahrzeuginnenraum. Die Abschlussscheibe bzw. Lichtscheibe wird dabei vom Benutzer als leuchtende Fläche wahrgenommen. Die Primärlichtquelle ist mit einer Steuereinheit verbunden, die die Leuchte aktiviert und ggf. die Leuchtintensität steuert. Im einfachsten Fall kann dies ein simpler Schalter sein, es sind aber auch komplexere Steuerungen, beispielsweise unter Berücksichtigung von Sensordaten eines Umgebungslichtsensors, einer komplexeren Eingabe eines Benutzers oder von Daten über die Besetzung des Fahrzeugs mit Passagieren denkbar. Bis hierhin entspricht der Aufbau der erfindungsgemäßen Beleuchtungseinrichtung einer herkömmlichen Beleuchtungseinrichtung.

Die Sekundärlichtquelle wird verwendet, um die Leuchte insbesondere im ausgeschalteten Zustand mit einer Kennzeichnung zu versehen. Dazu wird das Licht der Sekundärlichtquelle in das Lichtleitelement, das flächig ausgestaltet sein kann, eingekoppelt. Innerhalb des Lichtleitelements sind Störstellen angeordnet, die geeignet sind, um das eingekoppelte Licht aus dem Lichtleitelement herauszustreuen. Die Störstellen können direkt an der Oberfläche des Lichtleitelements oder tiefer im Volumen des Lichtleitelements angeordnet sein. Die Störstellen sind relativ zueinander derart angeordnet, dass sie zusammengenommen eine vorgegebene Form ergeben. Diese Form ist dabei vorzugsweise so orientiert, dass sie parallel zur Lichtscheibe bzw. zu deren äußerer, zum Fahrzeuginnenraum hin gewandter Oberfläche verläuft. Der Anteil des Lichts der Sekundärlichtquelle, der von den Störstellen in Richtung der Lichtscheibe gestreut wird, ist von einem Benutzer in der vorgegebenen Form auf der Lichtscheibe wahrnehmbar und kann zur Kennzeichnung der Leuchte genutzt werden.

In einer zweckmäßigen Ausgestaltung der Erfindung ist vorgesehen, dass die vorgegebene Form ein Piktogramm darstellt. Es ist so eine einfache und effektive Kennzeichnung der einzelnen Leuchten möglich. Die in das Lichtleitelement eingebrachten Störstellen können aus Punkten, aus Linien und/oder aus Flächen bestehen. An den Störstellen wird das in das Lichtleitelement eingekoppelte Licht gestreut und in Richtung des Betrachters abgelenkt. Hierzu kann das Licht der Sekundärlichtquelle seitlich in das Lichtleitelement eingekoppelt werden. Licht, das auf keine Störstellen trifft, durchquert das Lichtleitelement somit im Wesentlichen senkrecht zu dem von der Primärlichtquelle ausgesandten Licht und tritt daher nicht aus der Leuchte aus. Es ergibt sich so eine sehr dezente Kennzeichnung der Leuchte durch die Beleuchtung des vorgegebenen Musters bzw. des Zeichens oder Piktogramms.

In einer bevorzugten Ausgestaltung ist das Lichtleitelement im Wesentlichen parallel zu der Lichtscheibe ausgerichtet. Es ergibt sich so eine symmetrische Ausgestaltung und dadurch eine homogene Darstellung der Kennzeichnung der Leuchte. Unter einer "im Wesentlichen" parallelen oder senkrechten Ausrichtung zweier Richtungen zueinander wird dabei insbesondere verstanden, dass die Richtungen parallel bzw. senkrecht zueinander liegen oder einen kleinen Winkel von nicht mehr als 10° miteinander bilden. In einem Spezialfall sind die beiden Richtungen jeweils exakt parallel bzw. senkrecht zueinander ausgerichtet.

Ausführungsformen, in denen das Lichtleitelement einen Winkel mit der Lichtscheibe von mehr als 10°, beispielsweise von mehr als 20° oder auch von mehr als 30°, bildet, sind natürlich ebenfalls möglich. In jedem Fall ist es von Vorteil, wenn das Lichtleitelement die Form einer planparallelen Platte aufweist, da dann das Licht der Primärlichtquelle das Lichtleitelement weitestgehend unbeeinflusst durchqueren kann.

Zweckmäßigerweise kann vorgesehen sein, dass ein Querschnitt der Lichtscheibe in einer Lichtausbreitungsrichtung des von der Primärlichtquelle ausgesandten Lichts gesehen größer ist, als ein entsprechender Querschnitt des Lichtleitelements. Es wird so möglich, das Licht auch von kleinen, nahezu punktförmigen Lichtquellen von einer größeren Oberfläche aus in den Innenraum des Fahrzeugs abzugeben, sodass eine Blendwirkung für den Benutzer vermieden oder zumindest deutlich verringert wird.

Um die Bedienung für den Benutzer besonders einfach zu gestalten, kann die Beleuchtungseinrichtung derart ausgestaltet sein, dass ein Bereich der Lichtscheibe, in dem die vorgegebene Form bei ausgeschalteter Primärlichtquelle und bei eingeschalteter Sekundärlichtquelle sichtbar ist, berührungsempfindlich ausgestaltet ist. Es wird so eine intuitive Bedienung möglich, da der Benutzer genau den Bereich berühren muss, der die Kennzeichnung der Leuchte beinhaltet. Es ist natürlich ebenfalls möglich, dass die gesamte Lichtscheibe berührungsempfindlich ausgestaltet ist, so dass der Benutzer nicht darauf achten muss, welchen Bereich der Lichtscheibe er berührt. Eine Steuerung ist dabei einerseits durch einen mechanischen Kontakt mit dem berührungsempfindlichen Bereich und andererseits, je nach Ausgestaltung der Sensorik, auch durch eine Annäherung eines Körperteils des Benutzers, beispielsweise eines Fingers, an den entsprechenden Bereich. Im Folgenden werden diese beiden Möglichkeiten nicht immer getrennt voneinander erwähnt, so dass im Rahmen der vorliegenden Anmeldung unter dem Ausdruck "berührungsempfindlich" alternativ auch immer "annäherungsempfindlich" verstanden werden soll.

Eine spezielle Ausgestaltung der Erfindung sieht vor, dass die vorgegebene Form bei eingeschalteter Sekundärlichtquelle in einem zentralen Bereich der Lichtscheibe sichtbar ist. Hierzu ist es zweckmäßig, wenn die Störstellen, die das vorgegebene Muster bilden, ebenfalls in einem zentralen Bereich des Lichtleitelements angeordnet sind. Es ergibt sich so ein optisch ansprechendes Erscheinungsbild der Leuchte. Insbesondere wenn mehrere Muster, beispielsweise in Form von zwei oder mehr Piktogrammen, vorhanden sind, kann es zweckmäßig sein, die Muster nicht in der Mitte, sondern außerhalb des Zentrums der Lichtscheibe darzustellen. Entsprechendes gilt dann für die Anordnung der Störstellen in dem Lichtleitelement. Beispielsweise können ein Piktogramm zum Einschalten der Leuchte und ein Piktogramm zum Ausschalten der Leuchte vorgesehen sein, oder es könnten mit verschiedenen berührungsempfindlichen Bereichen, die entsprechend mit unterschiedlichen Formen bzw. Piktogrammen gekennzeichnet sind, unterschiedliche Beleuchtungsprogramme verknüpft sein. Es könnte sich dabei z.B. um unterschiedliche Beleuchtungsintensitäten, eine gleichzeitige Ansteuerung von mehreren Leuchten oder aber auch um unterschiedliche Lichtfarben handeln.

In einer zweckmäßigen Ausgestaltung ist das Lichtleitelement derart angeordnet, dass von der Primärlichtquelle ausgehendes Licht das Lichtleitelement durchquert. Das Lichtleitelement kann dazu als dünne Schicht ausgebildet sein, die sich im Wesentlichen senkrecht zu einer Hauptausbreitungsrichtung des von der Primärlichtquelle ausgesandten Lichts erstreckt. Das Lichtleitelement kann dann auch im Wesentlichen parallel zu der Lichtscheibe ausgerichtet sein. Das Licht der Primärlichtquelle durchquert dann zunächst das Lichtleitelement und dann die Lichtscheibe, von wo aus es in den Innenraum des Fahrzeugs gelangt. Das Licht der Sekundärlichtquelle wird zunächst in das Lichtleitelement eingekoppelt und an den Störstellen gestreut. Der in Richtung der Lichtscheibe gestreute Anteil des Lichts der Sekundärlichtquelle durchquert dann ebenfalls die Lichtscheibe und gelangt auf diese Weise ebenfalls in den Innenraum des Fahrzeugs. Das Licht der Primärlichtquelle durchquert das Lichtleitelement hingegen im Wesentlichen unbeeinflusst.

Um eine kompakte Leuchte zu erhalten ist es von Vorteil, wenn das Lichtleitelement eine Dicke von 0,1 mm bis 3 mm aufweist. Das Lichtleitelement ist dann kostengünstig herstellbar, beansprucht wenig Bauraum und beeinflusst das Licht der Primärlichtquelle nur minimal. Besonders dünne Lichtleitelemente können eine Dicke zwischen 0,1 mm und 1 mm aufweisen und beispielsweise als Folie ausgestaltet sein.

Vorzugsweise ist die Steuereinheit ausgebildet, um abhängig von einem von der berührungsempfindlichen Lichtscheibe ausgegebenen Sensorsignal die Primärlichtquelle anzusteuern. Dabei kann ein einfaches Berühren der Lichtscheibe bzw. des berührungsempfindlichen Bereichs der Lichtscheibe ein simples Einschalten bzw. Ausschalten der Leuchte bewirken. Ebenfalls ist es möglich, dass beispielsweise über die Dauer der Berührung oder ein bestimmtes Berührungsmuster weitere Steuerbefehle ausgelöst werden. So ist beispielsweise denkbar, dass die Leuchte dimmbar ausgestaltet ist.

Zweckmäßigerweise ist die Steuereinheit derart ausgestaltet, dass die Sekundärlichtquelle unabhängig von einem Betriebszustand der Primärlichtquelle eingeschaltet und ausgeschaltet wird. Es kann aber auch vorgesehen sein, die Sekundärlichtquelle auszuschalten, sobald die Primärlichtquelle eingeschaltet wird. Entsprechend kann die Sekundärlichtquelle eingeschaltet werden, sobald die Primärlichtquelle ausgeschaltet wird, um dem Benutzer jederzeit die Position und Funktion der Leuchte anzuzeigen.

Vorteilhafterweise kann die erfindungsgemäße Leuchte bzw. die Steuereinheit derart ausgestaltet sein, dass die Sekundärlichtquelle abhängig von einem Benutzungszustand des Fahrzeugs angesteuert wird. Als Benutzungszustand können beispielsweise zwei unterschiedliche Zustände, nämlich "Parken" im Sinne eines Zustands der Nichtbenutzung und "Fahren" im Sinne eines Zustands der Benutzung, unterschieden werden. Im Zustand "Fahren" ist es nicht notwendig, dass sich das Fahrzeug in Bewegung befindet. Vielmehr sollte der Zustand "Fahren" eingestellt werden, sobald erkannt wird, dass sich Personen in dem Fahrzeug befinden. Dies kann durch eine Überwachung der Türen, durch eine Überwachung des auf die Sitze einwirkenden Gewichts oder auf andere Art und Weise geschehen.

In einer Weiterbildung der Erfindung ist vorgesehen, dass eine Leuchtkraft der zumindest einen Sekundärlichtquelle bzw. eine Gesamtleuchtkraft der mehreren Sekundärlichtquellen weniger als 50%, bevorzugt weniger als 30% und besonders bevorzugt weniger als 10% einer Leuchtkraft der Primärlichtquelle beträgt. Es wird so sichergestellt, dass eine energieeffiziente Ausgestaltung vorliegt sowie, dass die reine Schaltersuchbeleuchtung den Benutzer weder blendet noch stört.

In einer kosteneffizienten Ausgestaltung ist das Lichtleitelement als lichtleitende Folie ausgebildet. Eine solche Folie ist kostengünstig herstellbar und kann flexibel verarbeitet werden.

Um eine angenehme Beleuchtung des Innenraums des Fahrzeugs zu erreichen, kann die Lichtscheibe als Volumenstreuer ausgeführt sein.

In alternativen Ausgestaltungen der Erfindung kann das Lichtrichtelement als Reflektor oder als Kollimator ausgestaltet sein. Beide Möglichkeiten sind aus dem Stand der Technik hinlänglich bekannt und werden daher an dieser Stelle nicht weiter diskutiert. Andere Arten von Lichtrichtelementen sind natürlich ebenfalls denkbar.

Die Störstellen in dem Lichtleitelement können durch Laserbestrahlung, durch einen lonenstrahl, durch mechanische Bearbeitung der Oberfläche des Lichtleitelements oder durch eine entsprechende Ausgestaltung einer zum Herstellen des Lichtleitelements verwendeten Form, insbesondere einer Spritzgussform, erzeugt werden. Dabei ist jede Ausgestaltung denkbar, die zu einer Streuung von in das Lichtleitelement eingekoppeltem Licht in Richtung der Lichtscheibe führt. Insbesondere können die Störstellen bzw. die vorgegebene Form in das Lichtleitelement eingeritzt sein.

Es kann vorgesehen sein, dass die Sekundärlichtquelle ausgebildet ist, um farbiges Licht auszusenden. Entsprechend lässt sich die jeweilige Leuchte dann durch ein farbiges Symbol, Zeichen oder Piktogramm kennzeichnen. In einer Weiterbildung der Erfindung kann vorgesehen sein, dass die Sekundärlichtquelle ausgebildet ist, um zumindest Licht zweier unterschiedlicher Farben auszusenden, wobei die jeweils ausgesendete Farbe abhängig von einem Steuersignal sein kann. Ebenso können zwei oder mehr Sekundärlichtquellen vorhanden sein, die beispielsweise an einander gegenüberliegenden Seiten des Lichtleitelements angeordnet sind und ggf. Licht unterschiedlicher Farben aussenden. Es ist auch eine Anordnung nebeneinander, also an der gleichen Seite des Lichtleitelements, möglich. Die einzige Bedingung ist, dass die Anordnung der Sekundärlichtquelle ein effizientes Einkoppeln des jeweils ausgesandten Lichts in das Lichtleitelement ermöglicht sowie, dass der Anteil des von der Sekundärlichtquelle ausgesendeten Lichts, der nicht an den Störstellen gestreut wird, nicht in den Fahrzeuginnenraum gelangt. Es soll also nur ein Anteil des von der Sekundärlichtquelle ausgesendeten Lichts in den Fahrzeuginnenraum gelangen, der an den Störstellen gestreut wurde. Es wird so erreicht, dass ein klar abgegrenztes Abbild der durch die Anordnung der Störstellen vorgegebenen Form von dem Benutzer wahrgenommen wird, nicht aber ein diffuses Leuchten der Beleuchtungseinrichtung bereits im ausgeschalteten Zustand.

Die Größe bzw. die Querschnittsfläche des Lichtleitelements kann sich an der Größe bzw. an der Querschnittsfläche des Lichtrichtelements orientieren bzw. dieser entsprechen. Es ist entsprechend möglich, dass die Lichtscheibe eine größere Oberfläche als das Lichtleitelement aufweist, da in der Regel die Lichtscheibe eine größere Oberfläche als das Lichtrichtelement aufweist.

In einer Weiterbildung der Erfindung ist vorgesehen, dass zumindest ein weiteres Lichtleitelement und eine weitere Sekundärlichtquelle vorhanden sind, so dass abhängig von einem Betriebszustand der Sekundärlichtquelle und der weiteren Sekundärlichtquelle unterschiedliche vorgegebene Formen für einen Benutzer sichtbar werden. Hierdurch kann beispielsweise ermöglicht werden, dass dem Benutzer angezeigt wird, dass abhängig von weiteren externen Parametern eine Berührung der Lichtscheibe unterschiedliche Funktionen auslöst.

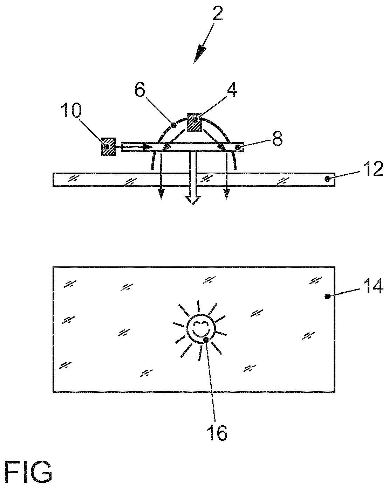

Ein Ausführungsbeispiel der Erfindung wird anhand der Zeichnung und der nachfolgenden Beschreibung näher erläutert. Die Figur zeigt einen Querschnitt eines Ausführungsbeispiels einer erfindungsgemäßen Beleuchtungseinrichtung.

Die Figur zeigt ein Ausführungsbeispiel einer erfindungsgemäßen Beleuchtungseinrichtung 2 in einem Querschnitt. Die Beleuchtungseinrichtung 2 umfasst eine Primärlichtquelle 4, die üblicherweise in Form einer LED oder mehrerer LEDs ausgeführt ist. Das Licht der LED 4 wird in einer primären Abstrahlungsrichtung, die in der Figur nach unten weist, abgestrahlt. Lichtanteile, die unter einem Winkel zu der primären Abstrahlungsrichtung von der LED 4 ausgesendet werden, werden von dem Lichtrichtelement 6 derart abgelenkt, dass sie sich ebenfalls in der primären Abstrahlungsrichtung ausbreiten. Das Lichtrichtelement 6 ist in dem dargestellten Ausführungsbeispiel als Reflektor ausgestaltet. Die sich somit parallel in der primären Abstrahlungsrichtung ausbreitenden Lichtstrahlen durchqueren dann zunächst das Lichtleitelement 8 und dann die Lichtscheibe 12, um danach in den Innenraum des Fahrzeugs einzutreten. Die Lichtscheibe 12 ist im dargestellten Ausführungsbeispiel rechteckig ausgeführt. Sie kann aber auch andere Formen wie zum Beispiel quadratisch, oval oder rund annehmen.

Zwischen der Primärlichtquelle 4 und der Lichtscheibe 12 ist das Lichtleitelement 8 angeordnet. Es erstreckt sich parallel zu der Lichtscheibe 12 und durchdringt im dargestellten Ausführungsbeispiel den Reflektor 8. Von einer außerhalb des Lichtrichtelements 8 angeordneten Sekundärlichtquelle 10 ausgestrahltes Licht wird in das Lichtleitelement 8 ein gekoppelt. Dies geschieht im dargestellten Ausführungsbeispiel über eine Stirnseite des Lichtleitelements 8. Das in das Lichtleitelement 8 eingekoppelte Licht der Sekundärlichtquelle 10 wird dann an in dem Lichtleitelement 8 vorhandenen Störstellen gestreut und verlässt das Lichtleitelement 8 in Richtung der Lichtscheibe 12, die es dann gemeinsam mit dem von der Primärlichtquelle 4 ausgesandten Licht durchquert und in den Innenraum des Fahrzeugs eintritt. Die Sekundärlichtquelle 10 kann ebenfalls als LED ausgeführt sein. Es ist dabei der Fall dargestellt, dass sowohl die Primärlichtquelle 4 als auch die Sekundärlichtquelle 10 eingeschaltet sind.

Im unteren Bereich der Figur ist eine Draufsicht der Lichtscheibe 12 bzw. das von einem Benutzer wahrgenommene Licht 14 dargestellt. Das abgestrahlte Lichtfeld 14 hat im Wesentlichen die Form der Lichtscheibe 12. Weiterhin ist das Piktogramm 16 zu erkennen, das durch an den Störstellen im Lichtleiter 8 gestreutes Licht entsteht und für den Benutzer wahrnehmbar wird. Das Piktogramm 16 ist im Regelfall dann zu sehen, wenn die Primärlichtquelle 4 ausgeschaltet ist. Wenn sowohl die Primärlichtquelle 4 als auch die Sekundärlichtquelle 10 eingeschaltet sind überstrahlt im Normalfall das Licht der Primärlichtquelle 4 das Licht der Sekundärlichtquelle 10, sodass das Piktogramm 16 nicht sichtbar ist. Insofern ist abweichend vom oberen Teil der Figur eine Situation dargestellt, in der das Lichtfeld 14 dunkel ist, und lediglich das Piktogramm 16 sichtbar ist.

### Bezugszeichenliste

- 2: Beleuchtungseinrichtung
- 4: Primärlichtquelle
- 6: Lichtrichtelement
- 8: Lichtleitelement
- 10: Sekundärlichtquelle
- 12: Lichtscheibe
- 14: wahrgenommenes Lichtfeld
- 16: Piktogramm

## Patentansprüche

1. Beleuchtungseinrichtung (2) zum Beleuchten eines Innenraums eines Fahrzeugs, mit einer Primärlichtquelle (4), einem Lichtrichtelement (6) und einer die Beleuchtungseinrichtung (2) zum Innenraum des Fahrzeugs hin abschließenden Lichtscheibe (12),
- wobei zwischen der Primärlichtquelle (4) und der Lichtscheibe (12) ein Lichtleitelement (8) angeordnet ist, welches Störstellen aufweist, die in einer vorgegebenen Form angeordnet sind,
- wobei eine Sekundärlichtquelle (10) derart angeordnet ist, dass von der Sekundärlichtquelle (10) ausgesandtes Licht in das Lichtleitelement (8) eingekoppelt wird, und
- wobei die Lichtscheibe (12) berührungsempfindlich und/oder annäherungsempfindlich ausgestaltet ist,
**dadurch gekennzeichnet,**
- **dass** das Lichtleitelement (8) zwischen der Primärlichtquelle (4) und einem zu der Lichtscheibe (12) hin weisenden Ende des Lichtrichtelements (6) angeordnet ist.

2. Beleuchtungseinrichtung (2) nach dem vorstehenden Anspruch, **dadurch gekennzeichnet, dass** das Lichtleitelement (8) im Wesentlichen parallel zu der Lichtscheibe (12) ausgerichtet ist.

3. Beleuchtungseinrichtung (2) nach einem der vorstehenden Ansprüche, **dadurch gekennzeichnet, dass** ein Bereich der Lichtscheibe (12), in dem die vorgegebene Form bei ausgeschalteter Primärlichtquelle (4) und bei eingeschalteter Sekundärlichtquelle (10) sichtbar ist, berührungsempfindlich und/oder annäherungsempfindlich ausgestaltet ist.

4. Beleuchtungseinrichtung (2) nach einem der vorstehenden Ansprüche, **dadurch gekennzeichnet, dass** das Lichtleitelement (8) eine Dicke zwischen 0,1 mm und 3 mm aufweist.

5. Beleuchtungseinrichtung (2) nach einem der vorstehenden Ansprüche, **dadurch gekennzeichnet, dass** das Lichtleitelement (8) als lichtleitende Folie ausgebildet ist.

6. Beleuchtungseinrichtung (2) nach einem der vorstehenden Ansprüche, **dadurch gekennzeichnet, dass** die Sekundärlichtquelle (10) ausgebildet ist, um Licht zumindest zweier unterschiedlicher Farben auszusenden, und die jeweils ausgesendete Farbe abhängig von einem Steuersignal ist.

7. Beleuchtungseinrichtung (2) nach einem der vorstehenden Ansprüche, **dadurch gekennzeichnet, dass** zumindest ein weiteres Lichtleitelement und eine weitere Sekundärlichtquelle vorhanden sind, so dass abhängig von einem Betriebszustand der Sekundärlichtquelle und der weiteren Sekundärlichtquelle unterschiedliche vorgegebene Formen für einen Benutzer sichtbar werden.

8. Kraftfahrzeug mit einer Beleuchtungseinrichtung nach einem der vorstehenden Ansprüche.

## Claims

1. Illumination device (2) for illuminating an interior space of a vehicle, having a primary light source (4), a light-directing element (6) and a lens (12) closing off the illumination device (2) in the direction of the interior space of the vehicle,
- wherein a light-guide element (8) is arranged between the primary light source (4) and the lens (12), which light-guide element (8) has discontinuities that are arranged in a specified shape,
- wherein a secondary light source (10) is arranged such that light emitted by the secondary light source (10) is coupled into the light-guide element (8), and
- wherein the lens (12) is designed to be sensitive to touch and/or sensitive to proximity,
characterized
- in that the light-guide element (8) is arranged between the primary light source (4) and an end of the light-directing element (6) facing the lens (12).

2. Illumination device (2) according to the preceding claim, **characterized in that** the light-guide element (8) is oriented substantially parallel to the lens (12).

3. Illumination device (2) according to either of the preceding claims, **characterized in that** a region of the lens (12) in which the specified shape is visible when the primary light source (4) is switched off and the secondary light source (10) is switched on is designed to be sensitive to touch and/or sensitive to proximity.

4. Illumination device (2) according to any of the preceding claims, **characterized in that** the light-guide element (8) has a thickness of between 0.1 mm and 3 mm.

5. Illumination device (2) according to any of the preceding claims, **characterized in that** the light-guide element (8) is embodied in the form of a light-guide film.

6. Illumination device (2) according to any of the preceding claims, **characterized in that** the secondary light source (10) is configured to emit light in at least two different colours, and the colour that is respectively emitted depends on a control signal.

7. Illumination device (2) according to any of the preceding claims, **characterized in that** at least a further light-guide element and a further secondary light source are present, so that different specified shapes become visible for a user depending on an operating state of the secondary light source and of the further secondary light source.

8. Motor vehicle having an illumination device according to any of the preceding claims.

## Revendications

1. Dispositif d'éclairage (2) permettant d'éclairer un habitacle d'un véhicule, comprenant une source de lumière primaire (4), un élément de projection de lumière (6) et un cabochon (12) séparant le dispositif d'éclairage (2) en direction de l'habitacle du véhicule,
- dans lequel, entre la source de lumière primaire (4) et le cabochon (12), un élément de guidage de lumière (8) est disposé qui présente des irrégularités qui sont disposées selon une forme prédéfinie,
- dans lequel une source de lumière secondaire (10) est disposée de telle sorte que la lumière émise par la source de lumière secondaire (10) est injectée dans l'élément de guidage de lumière (8), et
- dans lequel le cabochon (12) est configuré de manière sensible au toucher et/ou sensible à la proximité,
**caractérisé en ce que**
- l'élément de guidage de lumière (8) est disposé entre la source de lumière primaire (4) et une extrémité tournée vers le cabochon (12) de l'élément de projection de lumière (6).

2. Dispositif d'éclairage (2) selon la revendication précédente, **caractérisé en ce que** l'élément de guidage de lumière (8) est aligné substantiellement en parallèle au cabochon (12).

3. Dispositif d'éclairage (2) selon l'une quelconque des revendications précédentes, **caractérisé en ce qu'**une zone du cabochon (12) dans laquelle la forme prédéfinie est visible si la source de lumière primaire (4) est éteinte et la source de lumière secondaire (10) est allumée, est configurée de manière sensible au toucher et/ou sensible à la proximité.

4. Dispositif d'éclairage (2) selon l'une quelconque des revendications précédentes, **caractérisé en ce que** l'élément de guidage de lumière (8) présente une épaisseur comprise entre 0,1 mm et 3 mm.

5. Dispositif d'éclairage (2) selon l'une quelconque des revendications précédentes, **caractérisé en ce que** l'élément de guidage de lumière (8) est réalisé sous la forme d'une feuille conductrice de lumière.

6. Dispositif d'éclairage (2) selon l'une quelconque des revendications précédentes, **caractérisé en ce que** la source de lumière secondaire (10) est réalisée pour émettre de la lumière d'au moins deux couleurs différentes, et la couleur respectivement émise dépend d'un signal de commande.

7. Dispositif d'éclairage (2) selon l'une quelconque des revendications précédentes, **caractérisé en ce qu'**au moins un autre élément de guidage de lumière et une autre source de lumière secondaire sont présents de sorte qu'en fonction d'un état de fonctionnement de la source de lumière secondaire et de l'autre source de lumière secondaire, différentes formes prédéfinies deviennent visibles pour un utilisateur.

8. Véhicule automobile comprenant un dispositif d'éclairage selon l'une quelconque des revendications précédentes.
